Europäisches Patentamt

European Patent Office

Office européen des brevets

(11) Publication number: **0 088 478**
**B1**

(12) **EUROPEAN PATENT SPECIFICATION**

(45) Date of publication of patent specification: **11.06.86**

(51) Int. Cl.⁴: **C 01 C 1/12**

(21) Application number: **83200309.9**

(22) Date of filing: **03.03.83**

(54) **Process for the separation of ammonia and carbon dioxide from mixtures containing ammonia, carbon dioxide and water.**

(30) Priority: **05.03.82 NL 8200905**

(43) Date of publication of application:
**14.09.83 Bulletin 83/37**

(45) Publication of the grant of the patent:
**11.06.86 Bulletin 86/24**

(84) Designated Contracting States:
**AT BE DE FR GB IT NL SE**

(56) References cited:
**DE-A-1 592 349**
**DE-C- 669 314**
**GB-A- 916 945**
**GB-A-1 129 939**
**NL-A- 143 063**
**US-A-2 812 829**
**US-A-3 112 177**
**US-A-3 114 681**
**US-A-3 336 761**
**US-A-3 488 293**
**US-A-4 013 431**
**US-A-4 060 591**
**US-A-4 120 667**
**US-A-4 163 648**
**US-A-4 251 235**

(73) Proprietor: **STAMICARBON B.V.**
**Mijnweg 1**
**NL-6167 AC Geleen (NL)**

(72) Inventor: **Goorden, Josephus Johannes Petrus Maria**
**Haagstraat 29**
**NL-6133 VR Sittard (NL)**
Inventor: **Laurens, Jan Simon**
**Attilaweg 13**
**NL-6224 JS Maastricht (NL)**
Inventor: **Biermans, Andreas Johannes**
**Slagboomweg 23**
**NL-6129 GA Urmond (NL)**

(74) Representative: **Hatzmann, Marinus Jan et al**
**OCTROOIBUREAU DSM P.O.Box 9**
**NL-6160 MA Geleen (NL)**

Courier Press, Leamington Spa, England.

## Description

The invention relates to a process for the separate recovery of ammonia substantially free from carbon dioxide and water and of carbon dioxide substantially free from ammonia and water from a mixture of, substantially, ammonia and carbon dioxide, in which process an ammonia off gas substantially free from carbon dioxide and water is separated from a mixture containing ammonia, carbon dioxide and possibly water in an ammonia separation zone which comprises a distilling or rectifying zone and the resulting liquid phase which contains ammonia, carbon dioxide and possibly water is removed from the ammonia separation zone and fed to a carbon dioxide separation zone, a carbon dioxide off gas substantially free from ammonia and water is separated out in said carbon dioxide separation zone which comprises a distilling or rectifying zone and the resulting liquid phase containing ammonia, carbon dioxide and possibly water is removed from the carbon dioxide separation zone.

In some chemical processes mixtures containing ammonia and carbon dioxide, and sometimes also containing water, are obtained as byproducts. For instance, in the synthesis of melamine from urea, a gas mixture is obtained which, in addition to melamine, also contains ammonia and carbon dioxide in amounts of at least 1.7 tons per ton of melamine. Such mixtures are also obtained in the preparation of urea from ammonia and carbon dioxide, resulting from the decomposition of the by-product ammonium carbamate, and its separation from the urea product. In order to effectively utilize this ammonia and carbon dioxide after separating it from the melamine or urea, for example as recycle to a urea synthesis process, it is in most cases necessary to raise the gases to a higher pressure. Compression of such a mixture requires special measures to prevent the condensation of ammonia and carbon dioxide and the deposition of solid ammonium carbamate thereby formed.

For this reason, such gas mixtures are usually absorbed in water or in an aqueous solution, which results in the formation of an ammonium carbamate solution which can be pumped to the urea synthesis reactor, sometimes being concentrated by desorption and repeated absorption at a higher pressure. A disadvantage of this procedure is that the water recycled to the urea reactor together with the ammonia and carbon dioxide has an unfavourable effect on the urea synthesis reaction.

It has been proposed to separately remove the ammonia and carbon dioxide from the mixtures, and to separately recycle them in order to avoid the formation and deposition of ammonium carbamate. However, the binary system of ammonia and carbon dioxide forms a maximum boiling azeotrope at a molar ammonia-to-carbon dioxide ratio of about 2:1, and therefore cannot be separated by simple distillation. This phenomenon also occurs in the ternary system of ammonia, carbon dioxide and water, and the term azeotrope as used herein should be understood to include this phenomenon in the ternary system as well. Also as used herein, with respect to such binary or ternary mixture, the term 'rich' with respect to ammonia shall be understood to mean that when heat is applied to a mixture 'rich' in ammonia, substantially pure gaseous ammonia escapes, until the remaining mixture has a composition on the boundary line (to be defined hereinafter). On the other hand the term 'lean' with respect to ammonia means that the mixture is not 'rich' in ammonia.

Conversely the term 'rich' with respect to carbon dioxide means that when heat is applied to a mixture 'rich' in carbon dioxide, substantially pure carbon dioxide escapes. The term 'lean' with respect to carbon dioxide means, that the mixture is not 'rich' in carbon dioxide.

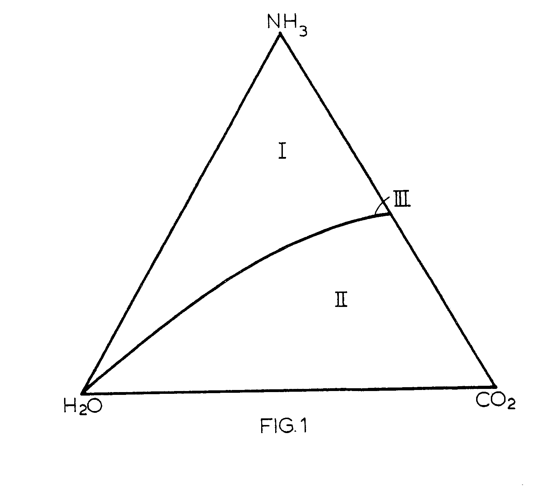

Fig. 1 shows the ammonia-carbon dioxide-water ternary system at constant pressure in a triangular diagram. The system is divided into two areas by line III which is termed herein the 'boundary line', and which represents the azeotropic composition at constant pressure at varying water concentrations. This boundary line cannot be transgressed by means of normal distilling or rectifying techniques.

Thus when a liquid mixture rich with respect to ammonia, that is a mixture falling within area I on fig. 1, is rectifed, gaseous ammonia escapes until the liquid composition reaches the boundary line. When a mixture rich with respect to carbon dioxide, falling within area II on fig. 1 is rectified, gaseous carbon dioxide escapes until the liquid composition reaches the boundary line. Once the liquid mixture composition is at the boundary line, further rectification or distillation at constant pressure results in a gaseous mixture of all components, but the composition of the remaining liquid mixture does not leave the boundary line. See also, P. J. C. Kaasenbrood, Chemical Reaction Engineering, Proceedings of the Fourth European Symposium, Sept. 9—11, 1968, published by Pergamon Press (1971), pages 317—328.

Various methods have been proposed to get around this azeotrope, all of which entail the separation of the ammonia-carbon dioxide mixtures into their constituents. Separate recovery of ammonia is most important, it being the most valuable component.

Some of these processes are based on selective absorption of either the ammonia or the carbon dioxide in a liquid. The prepublished Netherlands patent application No. 143,063, for example, describes a process in which ammonia is absorbed in an aqueous solution of an ammonium salt of a strong acid, such as ammonium nitrate, at an elevated pressure. Selective absorption of carbon dioxide by scrubbing a gas mixture with an aqueous alkanolamine solution, such as monoethanolamine is disclosed in German Pat. No. 669,314. However, all of these processes have the drawback that the absorbed component must thereafter be removed from the absorbent and purified. US Patent No. 4.120.667 discloses the absorption of ammonia from a gas mixture containing ammonia, carbon dioxide and water by a very short contact of the gas mixture with water or an aqueous solution. The resulting gaseous phase consisting mainly of carbon dioxide still contains considerable amounts of ammonia, which is a distinct disadvantage. The aqueous ammonium carbamate solution obtained from the absorption is subjected to a distillation, whereby on the one hand ammonia, and on the other hand a dilute ammonium carbamate solution are obtained. From this dilute solution ammonia and carbon dioxide are desorbed by the action of heat, resulting in a gaseous mixture of ammonia, carbon dioxide and water which is combined with the fresh feed, and an aqueous phase which is reused for the absorption of ammonia.

It has further been proposed to separate ammonia and carbon dioxide from mixtures of ammonia, carbon dioxide and water by distilling off most of the ammonia in a first step followed by distilling off the carbon dioxide in a second step carried out at a higher system pressure. The term 'system pressure' as used herein means the sum of the partial pressures of ammonia, carbon dioxide and water. Processes of this kind are described in U.S. Pat. Nos. 3,112,177 and 4,060,591 and in British Pat. Nos. 916,945 and 1,129,939.

U.S. Pat. No. 3,112,177 describes a process in which in a first step carried out at a system pressure of between 1 and 5 atmospheres absolute, gaseous carbon dioxide is separated from a mixture of ammonia, carbon dioxide and water, which mixture is lean with respect to ammonia. The remaining liquid is then stripped with, for instance, methane at an overall pressure of 1 bar. This results in a lowering of the system pressure and in the escape of ammonia and some carbon dioxide, so that a pressure of methane, ammonia and carbon dioxide with an overall pressure of 1 bar is obtained. In order to remove traces of carbon dioxide contained in the gas mixture, part of the mixture is condensed, causing the carbon dioxide to be absorbed by the liquid ammonia.

U.S. Pat. No. 4,060,591 discloses a process for recovering ammonia from aqueous mixtures also containing $CO_2$ and $H_2O$ wherein the mixture is first deacidified by stripping out $CO_2$ at an elevated pressure. The remaining liquid is then stripped of all $NH_3$, $CO_2$ and $H_2O$, and the resulting gas mixture is scrubbed or stripped at a reduced pressure, relative to the deacidification step, to yield a gas stream of pure ammonia.

A similar process is described in British Pat. No. 916,945 wherein an ammoniacal liquor is deacidified at an elevated pressure in a column wherein the ascending gas is scrubbed of ammonia by cold water, thereby yielding gaseous carbon dioxide. The remaining liquid is thereafter expanded into a stripper wherein it is freed of all ammonia and carbon dioxide. The resulting gaseous mixture is scrubbed with all or a portion of the ammoniacal liquor feed, before the latter is deacidified, yielding a substantially pure ammonia stream.

In British Pat. No. 1,129,939, a gas mixture consisting of ammonia and carbon dioxide, rich with respect to ammonia, is absorbed in water or an aqueous solution. Ammonia is distilled from the resulting aqueous solution at atmospheric pressure. The remaining solution is then subjected to fractional distillation at a pressure of between 5 and 20 bar with heating in order to remove the carbon dioxide.

These latter processes are based on the principle that changing the pressure of a system of ammonia, carbon dioxide and water makes is possible to separate out ammonia at the lower pressure and carbon dioxide at the higher pressure. In these 'pressure differential' processes the system pressure in the carbon dioxide separation zone should be at least twice that in the ammonia separation zone. Preferably the ratio between the system pressures in the ammonia separation and in the carbon dioxide separation zones should be between about 1:5 and 1:20, if the separation is to proceed smoothly.

However, the pressure differential processes have the drawback that if the ammonia and carbon dioxide mixture is available at a pressure of more than 1 atmosphere, it first has to be expanded to 1 atmosphere. Gaseous ammonia is then released having a maximum pressure of 1 atmosphere, or even lower in the event a large amount of another gas is present. If this ammonia is to be subjected to further processing, such as in a urea synthesis process, it has to be raised to a higher pressure. The compression energy required for this is quite substantial. Furthermore, the carbon dioxide concentration in the ammonia has to be kept extremely low in order to avoid the formation and deposition of solid ammonium carbamate in the compressor and high pressure lines.

An alternate process not requiring this pressure differential is disclosed in United States Patent No. 4 163 648. The process therein described permits the separate recovery of ammonia and carbon dioxide from such mixtures, without the need for such a pressure differential, if the ammonia and carbon dioxide containing stream sent to a carbon dioxide separation zone is diluted by the addition of water in an amount of between 0.2 and 6 times, by weight, the total weight of such ammonia and carbon dioxide containing feed. For simplicity this latter process will be referred to herein as a 'dilution process'.

According to one mode of realization of the dilution process, ammonia substantially free from carbon dioxide and water is first separated from a mixture of ammonia, carbon dioxide and possibly water, rich with respect to ammonia, in an ammonia separation zone. From the residual liquid phase leaving the bottom of this ammonia separation zone, carbon dioxide is separated in a carbon dioxide separation zone, wherein the residual liquid phase from the ammonia separation zone fed to the carbon dioxide separation zone is diluted with between 0.2 and 6 times its weight of water.

According to another mode of realization of the dilution process, carbon dioxide substantially free from ammonia and water is first separated in a carbon dioxide separation zone from a mixture of ammonia, carbon dioxide and possibly water, which mixture is lean with respect to ammonia. From the bottom of this carbon dioxide separation zone, the residual liquid phase is fed to a desorption zone wherein virtually all ammonia and carbon dioxide are desorbed and the resulting gas phase is introduced into the ammonia separation zone. Diluting water is added to this carbon dioxide separation zone in an amount of between 0.2 and 6 times, by weight, the combined total weight of the initial mixture to be separated, plus the residual liquid phase from the ammonia separation zone fed into the carbon dioxide separation zone.

According to another mode of realization of the dilution process, where the ammonia and carbon dioxide containing mixture to be separated also contains a substantial quantity of water, it may be advantageous to feed this mixture initially to the desorption zone wherein the ammonia and carbon dioxide are desorbed, and, together with some water vapour, are introduced into the ammonia separation zone. Ammonia, substantially free from carbon dioxide and water vapour, is obtained from the top of the ammonia separation zone, and the residual liquid phase, containing ammonia, carbon dioxide and water, is introduced into the carbon dioxide separation zone. Diluting water is also introduced into the carbon dioxide separation zone in an amount of about 0.2 to 6 times, by weight, the total quantity of the residual liquid phase from the ammonia separation zone fed into the carbon dioxide separation zone. Carbon dioxide, substantially free from ammonia and water, is obtained from the top of the carbon dioxide separation zone, and the residual liquid phase from the bottom of the carbon dioxide separation zone is fed to the desorption zone.

A number of modifications of these processes for the separation of gas mixtures consisting of ammonia, carbon dioxide and water are described in United States Patents No. 4 251 235 and No. 4 256 471.

In these processes the problem arises that in the desorption zone the total quantity of liquid must be made totally free from ammonia.

This means, among other things, that the total liquid stream must be heated at a very high temperature. Especially when large quantities of desorbed liquid are recycled into the process, this results in either the release of much heat at a less suitable place in the process, or the necessity of applying many and costly heat exchanges. Moreover, this results in enlargement of the recycle streams, so that larger equipment is required and more energy is consumed.

It is an object of the invention to provide a process in which this problem does not arise.

The invention is characterized in that the liquid phase removed from the carbon dioxide separation zone is fed to a first desorption zone in which a gas mixture consisting of, substantially, ammonia, carbon dioxide and water and a dilute solution of ammonia, carbon dioxide and water are formed, which dilute solution is in part fed to the carbon dioxide separation zone and in part to a second desorption zone, in which second desorption zone substantially all ammonia and carbon dioxide are desorbed from the dilute solution, to form a gas mixture consisting of, substantially, water ammonia and carbon dioxide on the one hand and, on the other, substantially pure water.

In a preferred mode of realization, 50—90% of the liquid from the first desorption zone is sent to the $CO_2$ separation zone.

The first desorption zone is preferably operated in such a way that the ammonia content in the liquid from the first desorption zone is between 0.1 and 5 per cent by weight, by preference ≤2.5 per cent by weight, more in particular ≤0.5 per cent by weight. With these ratios, a well-functioning process is obtained, no problems arising with the performance of the $CO_2$ separation zone.

By preference, the gas mixture from the second desorption zone is returned to the first desorption zone.

According to a mode of realization which is particularly preferred, all the heat required in the first and in the second desorption zone for desorbing the ammonia and carbon dioxide present is supplied in the second desorption zone.

It has been found that with this preferred mode of realization a particularly favourable gas-to-liquid ratio occurs in the second desorption zone. Thereby it is achieved, among other things, that without any problem very pure water is released from the bottom of the desorption zone. This water can without many problems be used as boiler feed water.

A second advantage of this favourable gas-to-liquid ratio is that any urea present in the liquid is quickly hydrolyzed to ammonia and carbon dioxide.

A third advantage lies in the fact that thus while the same high purity is maintained as in the known processes, less energy need be used.

Finally, in that case the vapour-to-liquid ratio in the first desorption zone is particularly favourable, so that the quantity of water in the off gas is reduced. On account of this, much less water enters the $NH_3$ separation zone, which has a favourable effect on the size of the recycle streams and hence on the energy consumption of the separation.

Thus, with this process the water obtained from the desorption zone is considerably more pure without an increase in the amount of energy used.

The process acording to this mode of realization has therefore the advantage that with less energy in the desorption zone than is used in the known process, the so-called stripping factor for ammonia in the top of the first desorption zone becomes so low that on the upper trays of this zone the ammonia content of the gas phase can be equal to or lower than on the trays immediately underneath them ('pinching' of the column).

This has the great advantage that the temperature in the top of this zone is in that case lower than with the known process.

This lower temperature on the upper trays of the desorption zone automatically implies that, compared with the known processes, less water is present in the gas mixture from the desorption zone. This is a very important advantage because the water content of this gas mixture has a great influence on the overall energy consumption of the separation, a lower water content resulting in a lower energy consumption.

According to another preferred mode of realization the gas mixture from the first desorption zone is at least in part fed to the ammonia separation zone.

A portion of this gas can with advantage be fed to the bottom of the $CO_2$ separation zone.

In addition, a gas stream containing an excess amount of $CO_2$, preferably virtually pure $CO_2$, can with advantage be fed to the bottom of the ammonia separation zone.

The liquid from the first desorption zone is fed to the $CO_2$ separation zone as diluting water.

The amount of water in this liquid is preferably 0.2 to 6 times, by weight, the total feed to this separation zone, not including the diluting water itself.

The pressure in the carbon dioxide separation zone can with advantage be chosen to be higher than in the ammonia separation zone. The efficiency of the separation is thereby improved.

The pressures in the various separation zones should preferably be between about 50 and 5000 kPa. A pressure of about 1800 kPa or more, depending upon the temperature of the available cooling water, as referred to hereinafter, in the ammonia separation zone offers the advantage that the separated ammonia can be liquified fairly easily and inexpensively by cooling with cooling water. When the dilution type process is applied, the system pressure in the carbon dioxide separation zone can be the same as in the ammonia separation zone, but this pressure can be higher as well. Preferably, however, the system pressure in the carbon dioxide separation zone is not greater than twice the system pressure in the ammonia separation zone.

The temperatures maintained in the various separation zones depend on the pressures, the composition of the feed and the purity required of the products to be separated. In the dilution process, where rectifying columns are used in the separation zones, these temperatures generally range within the limits stated in the following table:

|  | Bottom | Top |
|---|---|---|
| $NH_3$-separation | +60 to +170°C | −35 to +66°C |
| $CO_2$-separation | +75 to +200°C | 0 to +100°C |

The temperatures in the desorption zone are also determined by the pressures, the composition of the feed to the zone and the purity requirements (amount of ammonia and carbon dioxide) for the desorption water removed from the bottom of this zone. Generally these temperatures are chosen to be higher than the boiling point of the liquid phase to be desorbed at the pressures used.

The choice to which separation zone the mixture to be separated is initially fed depends i.a. upon the composition of this mixture. Thus, if it is rich with respect to ammonia, (in area 1 on Fig. 1), then it is very advantageously fed to the ammonia separation zone. On the other hand, if it is lean with respect to ammonia, (on boundary line III or within area II on Fig. 1), then it is very advantageously fed initially to the carbon dioxide separation step. Finally, if the mixture to be separated is rich with respect to ammonia and also contains a substantial quantity of water, it may be most advantageous to feed it initially to the desorption step.

The ammonia and carbon dioxide separation zones may consists of any type of apparatus suitable for separating the gaseous and liquid components in accordance with the invention including, but not limited to, rectification, distillation and scrubbing columns. However, rectification columns, or columns having rectification zones, are most suitable for use in the process of this invention.

Brief description of the drawings
Fig. 1 shows a diagram of the $NH_3/CO_2/H_2O$ system at constant pressure, which was described in detail above.

Fig. 2 shows a diagram for the process according to the invention in which the $NH_3$ and the $CO_2$ separation zones are operated at almost the same pressure.

Fig. 3 shows a diagram of a similar process in which the separations are effected at different pressures.

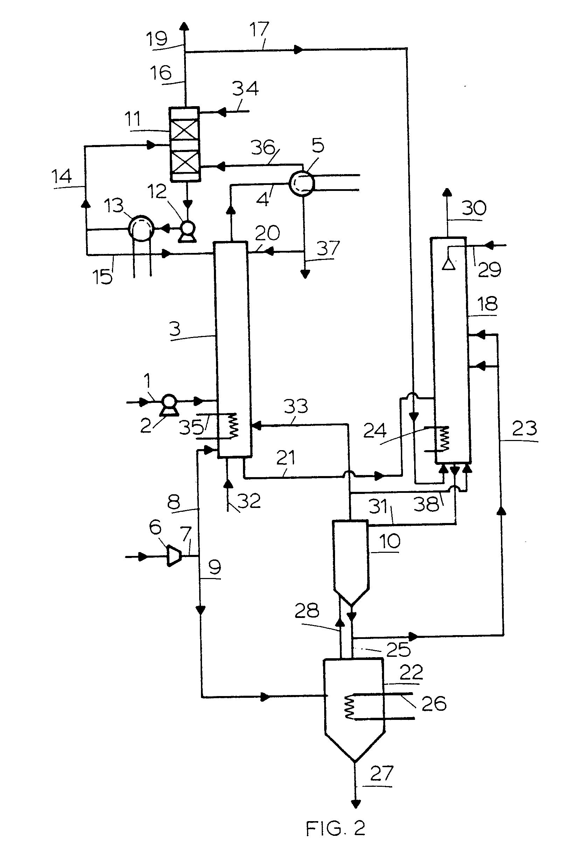

Detailed description of the preferred modes of realization
One preferred mode of realization of this invention is illustrated in Fig. 2 which represents a dilution process in which the ammonia and carbon dioxide separation zones are operated at substantially the same pressure. In this Fig. 2, the ammonia separation zone is comprised of $NH_3$-rectifying column 3, the carbon dioxide

separation zone of $CO_2$-rectifying column 18, the first desorption zone of desorber 10 and the second desorption zone of desorber 22.

A mixture of $NH_3$, $CO_2$ and $H_2O$ is fed to an $NH_3$-rectifying column 3 through line 1 and pump 2. $NH_3$ is discharged from the top of column 3 through line 4. This $NH_3$ can be condensed in condenser 5 by (deep)-cooling. A non-condensed gas mixture of $NH_3$ and inert gas escapes from the condenser. This inert gas comes from the air introduced into the installation in order to keep the structural materials used in vessels and lines in the passivated state, so that no unacceptable corrosion can occur. Naturally, oxygen or oxygen-releasing substance can be used for this purpose instead of air. The air is in part supplied to the $NH_3$ rectifying column 3 through compressor 6 and lines 7 and 8, and in part to the second desorber 22 through line 9. The gas mixture from condenser 5 is freed of $NH_3$ in scrubber 11 by scrubbing with water supplied through line 34, while an amount of adsorption heat is removed by cooling a portion of the aqueous $NH_3$ solution which is discharged through pump 12 in recycle cooler 13 and returning it to scrubber 11 through line 14. The solution then formed is returned to $NH_3$ rectifying column 3 through line 15.

The inert gas is discharged through line 16 and fed to the bottom of $CO_2$ rectifying column 18 through line 17. If so desired, it can also be vented completely or in part through line 19. A portion of the $NH_3$ liquefied in condenser 5 returns to the $NH_3$ rectifying column through line 20 to serve as reflux. Through line 32, a $CO_2$ containing gas can be fed to the $NH_3$ rectifying column. A solution of $NH_3$ and $CO_2$ in water is discharged from the bottom of $NH_3$ rectifying column 3 through line 21.

This solution is passed into $CO_2$ rectifying column 18, which is operated at virtually the same system pressure as $NH_3$ rectifying column 3. As a diluent, a portion of the bottom product of the first desorber 10 is fed to column 18 through line 23. In this column, the heat required for rectifying is applied through the heating coils 24 with the aid of, for example, steam.

Through line 29, an additional amount of scrubbing water is fed to column 18 in order to remove the $NH_3$ as completely as possible from the $CO_2$.

A gas consisting of $CO_2$ and possibly inert gas, containing (virtually) no $NH_3$, escapes from the top of column 18 through line 30. The bottom product of column 18, a dilute solution of $NH_3$ and $CO_2$ in water, is sent to the first desorber 10 through line 31, in which desorber part of the $NH_3$ and $CO_2$ present is removed.

A portion of the liquid obtained in the first desorber 10 is sent to $CO_2$ rectifying column 18 through line 23.

The gas mixture formed in the first desorber 10 goes at least in part to $NH_3$ rectifying column 3 through line 33. A portion of it may go to the bottom of the $CO_2$ rectifying column through line 38.

The remaining portion of the liquid from the first desorber 10 is fed to the second desorber 22 through line 25, in which second desorber the total heat required in the first and in the second desorber is applied through heating coils 26.

Through line 27, pure water is discharged. The heat contained therein can be used elsewhere in the process by heat exchange, for example in rectifying column 18.

Through line 28, a gas mixture consisting of, substantially, water, ammonia, carbon dioxide and inert gas, can be fed to the first desorber.

In the above-described mode of realization of the process according to the invention this gas mixture of $NH_3$, $CO_2$ and $H_2O$ from the first desorption zone 10, the composition of which lies in the area rich in $NH_3$, should ensure that the aqueous liquid phase at the bottom of the $CO_2$ rectifying column becomes rich with respect to $NH_3$.

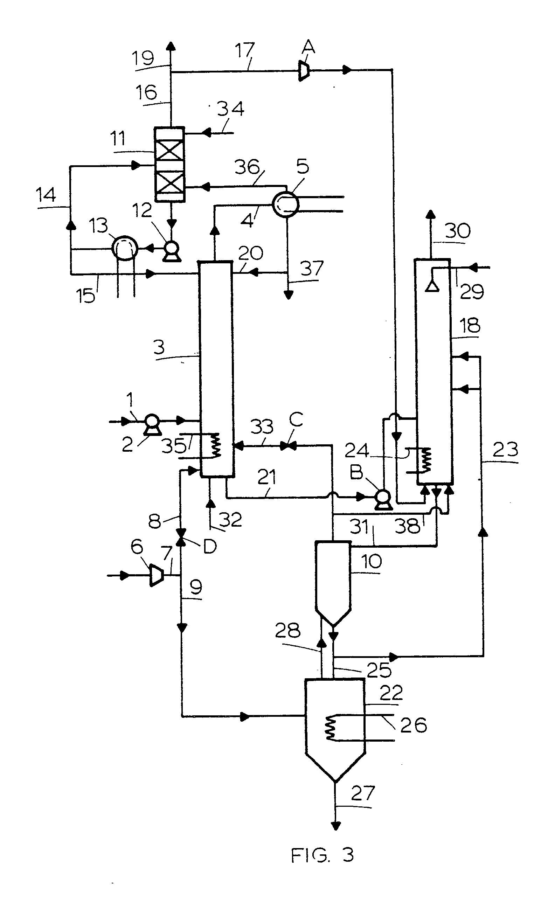

Another preferred mode of realization of the invention in which the dilution method is applied is illustrated in Fig. 3 wherein the $CO_2$ rectification is effected at a pressure higher than in the $NH_3$ rectification.

This figure is virtually the same as Fig. 2, and the reference figures have the same meaning. The difference lie in the fact that a compressor A and a pump B, respectively, have been installed in the lines 17 and 21 to raise the pressure of flows of gas and liquid, respectively. Furthermore, line 33 comprises a reducing valve C through which a portion of the gas mixture from the first desorber 10 is reduced in pressure. Here the desorption columns 10 and 22 are operated at virtually the same system pressure as the $CO_2$ rectification. Moreover, in line 8 a reducing valve D has been installed with which a portion of the air fed in is reduced in pressure.

In the above figure-description, the first and second desorption zones were understood to be designed as two separate columns. However, it is within the competence of one of ordinary skill in the art to design these two columns as one, modified, column.

The invention will now be explained by examples but is not restricted to them.

Example 1 and comparative example 1A

At a pressure of 1800 kPa, 44348 kg/h of a solution of $NH_3$ and $CO_2$ in water, which contained 38.2 wt % of $NH_3$ and 21.1 wt % of $CO_2$, was fed to the $NH_3$ separation zone of a separation installation as described in Fig. 3, differing in that no $CO_2$ was fed to the $NH_3$ column through line 32.

After cooling, 16,959 kg/h of liquid $NH_3$ was obtained from the $NH_3$ separation zone. From the $CO_2$ separation zone, which like the two desorption zones was operated at a system pressure of 3000 kPa, a gas mixture was obtained which contained 9400 kg/h of $CO_2$ and an amount of inert gas. From the bottom of the second desorption zone 17,989 kg/h of water was obtained which contained less than 50 ppm* ammonia and carbon dioxide.

A similar process was conducted using only one desorption zone instead of two. Comparison of the overall energy consumptions in both processes, on the basis of identical purification results, showed the process according to the invention to require 20 % less energy (steam) than the known process.

Example 2

Substantially pure $NH_3$ and substantially pure $CO_2$ were separated from a mixture thereof, also containing water, in an installation having a configuration as shown in Figure 3.

The reference figures relate to Figure 3 as described above in relation to Figure 2 and percentages are percentages by weight. The pressures mentioned relate to the $NH_3/CO_2/H_2O$ system pressure. The actual pressure may be slightly higher owing to the presence of inert gas.

At a pressure of 1800 kPa and a temperature of 40°C, 67500 kg/h of a solution of $NH_3$ and $CO_2$ in water, the composition of which is 35.7 % $NH_3$, 18.0 % $CO_2$ and 49.3 % water, are added to the $NH_3$-rectifying column 3.

31,425 kg/h of a gaseous mixture consisting of 60.2 % $NH_3$, 7.9 % $CO_2$, 31.9 % $H_2O$ from desorber 10., are expanded to 1800 kPa through valve C and then also fed into the $NH_3$-rectifying column 3. 37,242 kg/h of gaseous mixture consisting of 99.9 % $NH_3$ and 0.1 % $H_2O$ are discharged from the top of this column. Part of this gaseous mixture is liquified by cooling in condensor 5. 12.697 kg/h of this mixture are returned to column 3 as a reflux. 24,100 kg/h of liquid $NH_3$ are discharged. A gaseous mixture consisting of 99.5 $NH_3$ and 0.5 % inert gas escape from condensor 5. This mixture is washed in scrubber 11 with 1438 kg/h of water. Heat is removed from scrubber 11 via recycle condensor 13. A solution consisting of 80.7 % $NH_3$ and 19.3 % $H_2O$ is returned to the $NH_3$-rectifying column. The temperature in the top of this column amounts to 47°C. 78,167 kg/h of a liquid with a temperature of 134°C and a composition of 24.1 % $NH_3$, 18.7 % $CO_2$ and 57.2 % $H_2O$ are passed from the bottom of the $NH_3$-rectifying column 3 through conduit 21 and pump B to the $CO_2$-rectifying column 18, which is operated at a system pressure of 3000 kPa.

This column 18, is fed with 11,631 kg/h of a gas mixture from desorption-zone 10 through conduit 38. Column 18 is also fed, through conduit 23, with 78,509 kg/h of a diluant consisting of water, 4.7 % $NH_3$ and 0.04 % $CO_2$, which has a temperature of 218°C when leaving the first desorbtion-zone 10 and with 8000 kg/h of an aqueous solution containing 0.5 % $CO_2$ and 1.0 % $NH_3$. From the second desorbtion zone 22 41080 kg/h of water, are discharged from the system, and this desorption water may be used, for instance, for the absorption of $NH_3$ and $CO_2$.

15,826 kg/h of washing water are fed to the top

*ppm=parts per million

of $CO_2$-rectifying column in order to wash out the last traces of $NH_3$. The bottom temperature of the $CO_2$-rectifying column 18 is kept at a temperature of 181°C by means of steam. The temperature at the top is 34°C. A gaseous mixture of 12,174 kg/h escapes from the top and contains, *inter alia*, $CO_2$ and contains less than 100 ppm $NH_3$. 171,961 kg/h of a solution having a temperature of 181°C and consisting of 81.0% $H_2O$, 17.0% $NH_3$ and 2.0 % $CO_2$ are passed from the bottom of the column 18 to desorber 10. The two desorbtion zones were combined in one apparatus, wherein the diluant was removed from the 7th-tray from below.

Comparative example 2A

Substantially pure $NH_3$ and substantially pure $CO_2$ were separated from a mixture thereof with water using in an installation having a configuration as shown in Figure 3.

The reference figures relate to Figure 3 as described above in relation to Figure 2 and percentages are percentages by weight. The pressures mentioned relate to the $NH_3/CO_2/H_2O$ system pressure. The actual pressure may be slightly higher owing to the presence of inert gas.

At a pressure of 1800 kPa and a temperature of 40°C, 67500 kg/h of a solution of $NH_3$ and $CO_2$ in water, the composition of which is 35.7 % $NH_3$, 18.0 % $CO_2$ and 49.3 % water, are added to the $NH_3$-rectifying column 3.

33,645 kg/h of a gaseous mixture consisting of 56.7 % $NH_3$, 6.7 % $CO_2$ and 36.6 % $H_2O$ from desorber 10, are expanded to 1800 kPa through valve C and then also fed into the $NH_3$-rectifying column 3. 37,241 kg/h of gaseous mixture consisting of 99.9 % $NH_3$ and 0.1 % $H_2O$ are discharged from the top of this column. Part of this gaseous mixture is liquified by cooling in condenser 5. 12,705 kg/h of this mixture are returned to column 3 as a reflux. 24,100 kg/h of liquid $NH_3$ are discharged. A gaseous mixture consisting of 99.5 % $NH_3$ and 0.5 % inert gas escape from the condenser 5. This mixture is washed in scrubber 11 with 1438 kg/h of water. Heat is removed from scrubber 11 via recycle condenser 13. A solution consisting of 81.0 % $NH_3$ and 19.0 % $H_2O$ is returned to the $NH_3$-rectifying column. The temperature in the top of this column amounts to 47°C. 80,387 kg/h of a liquid with a temperature of 135°C and a composition of 23.6 % $NH_3$, 17.9 % $CO_2$ and 58.5 % $H_2O$ are passed from the bottom of the $NH_3$-rectifying column 3 through conduit 21 and pump B to the $CO_2$-rectifying column 18, which is operated at a system pressure of 3000 kPa.

This column 18, is fed with 12200 kg/h of a gas mixture from desorbtion-zone 10 through conduit 38. Column 18 is also fed, through conduit 23, with 48,463 kg/h of a diluant consisting of water and traces of $NH_3$ and $CO_2$, which has a temperature of 232°C when leaving the desorber 10 and with 8000 kg/h of an aqueous solution containing 0.5 % $CO_2$ and 1.0 % $NH_3$. The two desorbers (10, 22) were combined in one apparatus. The diluant

for the $CO_2$-separation column was substantially pure water, obtained from the bottom of (22). 41,080 kg/h of water, are discharged from the system, and this desorption water may be used, for instance, for the absorption of $NH_3$ and $CO_2$.

15,822 kg/h of washing water are fed to the top of the $CO_2$-rectifying column in order to wash out the last traces of $NH_3$. The bottom temperature of the $CO_3$-rectifying column 18 is kept at a temperature of 181°C by means of steam. The temperature at the top is 42°C. A gaseous mixture of 12,167 kg/h escapes from the top and contains, *inter alia*, $CO_2$ and contains less than 100 ppm $NH_3$. 152,603 kg/h of a solution having a temperature of 181°C and consisting of 81.0 % $H_2O$, 17.0 % $NH_3$ and 2.0 % $CO_2$ are passed from the bottom of the column 18 to desorber 10.

The relative amounts of energy required for examples 2 and 2A are respectively 100 % and 105.7 %.

## Claims

1. Process for the separate recovery of ammonia substantially free from carbon dioxide and water and of carbon dioxide substantially free from ammonia and water from a mixture of, substantially, ammonia and carbon dioxide, in which process:

an ammonia off gas substantially free from carbon dioxide and water is separated from a mixture of ammonia, carbon dioxide and possibly water in an ammonia separation zone comprising a distillation or rectification zone and the remaining liquid phase, which contains ammonia, carbon dioxide and possibly water, is removed from the ammonia separation zone and fed to a carbon dioxide separation zone; a carbon dioxide off gas substantially free from ammonia and water is separated out in said carbon dioxide separation zone comprising a distillation or rectification zone and the remaining liquid phase, which contains ammonia, carbon dioxide and possibly water is removed from the carbon dioxide separation zone, and water or an aqueous solution is fed to the carbon dioxide separation zone, the process being characterized in that the liquid phase removed from the carbon dioxide separation zone is fed to a first desorption zone in which a gas mixture consisting of, substantially, ammonia, carbon dioxide and water and a dilute solution of ammonia, carbon dioxide and water are formed, which dilute solution is in part fed to the carbon dioxide separation zone and in part to a second desorption zone, in which second desorption zone substantially all ammonia and carbon dioxide are desorbed from the dilute solution to form, on the one hand, a gas mixture consisting of, substantially, water, ammonia and carbon dioxide and, on the other, substantially pure water.

2. Process according to claim 1, characterized in that the gas mixture from the second desorption zone is returned to the first desorption zone.

3. Process according to claim 2, characterized in that all the heat required in the first and in the second desorption zone is supplied in the second desorption zone.

4. Process according to any one or more of the claims 1—3, characterized in that the gas mixture from the first desorption zone is at least in part supplied to the ammonia separation zone.

5. Process according to claim 1, characterized in that to the carbon dioxide separation zone an amount of diluting water is supplied which is 0.2 to 6 times the feed to this zone.

6. Process according to claim 1, characterized in that the system pressure in the carbon dioxide separation zone is higher than in the ammonia separation zone.

## Patentansprüche

1. Verfahren zur gesonderten Gewinnung von im wesentlichen von Kohlendioxid und Wasser freiem Ammoniak und von im wesentlichen vom Ammoniak und Wasser freiem Kohlendioxid aus einem Gemisch von, im wesentlichen, Ammoniak und Kohlendioxid, bei welchem Verfahren: ein im wesentlichen von Kohlendioxid und Wasser freies Ammoniak-Abgas aus einem Gemisch von Ammoniak, Kohlendioxid und allenfalls Wasser in einer Ammoniak-Trennzone, welche eine Destillations- oder Rektifikationszone aufweist, abgetrennt wird und die zurückbleibende flüssige Phase, welche Ammoniak, Kohlendioxid und allenfalls Wasser enthält, aus der Ammoniak-Trennzone entfernt und einer Kohlendioxid-Trennzone zugeführt wird; ein im wesentlichen von Ammoniak und Wasser freies Kohlendioxid-Abgas in dieser Kohlendioxid-Trennzone, welche eine Destillations- oder Rektifikationszone aufweist, abgetrennt wird und die Verbleibende Flüssigkeit, welche Ammoniak, Kohlendioxid und allenfalls Wasser enthält, aus der Kohlendioxid-Trennzone entfernt und Wasser oder eine wässerige Lösung der Kohlendioxid-Trennzone zugeführt wird, welches Verfahren dadurch gekennzeichnet ist, daß die aus der Kohlendioxid-Trennzone entfernte flüssige Phase einer ersten Desorptionszone zugeführt wird, in welcher ein Gasgemisch, bestehend im wesentlichen aus Ammoniak, Kohlendioxid und Wasser, und eine verdünnte Lösung von Ammoniak, Kohlendioxid und Wasser gebildet werden, welche verdünnte Lösung zum Teil der Kohlendioxid-Trennzone und zum Teil einer zweiten Desorptionszone zugeführt wird, in welcher zweiten Desorptionszone im wesentlichen alles Ammoniak und Kohlendioxid aus der verdünnten Lösung desorbiert wird unter Bildung eines Gasgemisches bestehend im wesentlichen aus Wasser, Ammoniak und Kohlendioxid, einerseits, und von im wesentlichen reinem Wasser, anderseits.

2. Verfahren nach Anspruch 1, dadurch gekennzeichnet, daß das Gasgemisch aus der zweiten Desorptionszone in die erste Desorptionszone zurückgeführt wird.

3. Verfahren nach Anspruch 2, dadurch gekennzeichnet, daß alle in der ersten und in der zweiten Desorptionszone benötigte Wärme in der zweiten Desorptionszone zugeführt wird.

4. Verfahren nach einem der Ansprüch 1—3, dadurch gekennzeichnet, daß das Gasgemisch aus der ersten Desorptionszone zumindest zum Teil der Ammoniak-Trennzone zugeführt wird.

5. Verfahren nach Anspruch 1, dadurch gekennzeichnet, daß der Kohlendioxid-Trennzone Verdünnungswasser in der 0,2- bis 6-fachen Menge der Beschickung zu dieser Zone zugeführt wird.

6. Verfahren nach Anspruch 1, dadurch gekennzeichnet, daß der Systemdruck in der Kohlendioxid-Trennzone höher ist als in der Ammoniak-Trennzone.

**Revendications**

1. Procédé pour la récupération séparée d'ammoniac sensiblement exempt d'anhydride carbonique et d'eau et d'anhydride carbonique sensiblement exempt d'ammoniac et d'eau à partir d'un mélange comprenant sensiblement de l'ammoniac et de l'anhydride carbonique, procédé selon lequel:

on sépare l'ammoniac gazeux d'échappement sensiblement exempt d'anhydride carbonique et d'eau d'un mélange d'ammoniac, d'anhydride carbonique et éventuellement d'eau dans une zone de séparation d'ammoniac comprenant une zone de distillation ou rectification et on soutire la phase liquide restante qui contient l'ammoniac, l'anhydride carbonique et éventuellement l'eau de la zone de séparation d'ammoniac et on la transfère dans une zone de séparation d'anhydride carbonique; on sépare l'anhydride carbonique gazeux d'échappement sensiblement exempt d'ammoniac et d'eau dans ladite zone de séparation d'anhydride carbonique comprenant une zone de distillation ou rectification et on soutire la phase liquide restante qui contient l'ammoniac, l'anhydride carbonique et éventuellement de l'eau de la zone de séparation d'anhydride carbonique et on envoie l'eau ou une solution aqueuse dans la zone de séparation d'anhydride carbonique, ce procédé étant caractérisé en ce que la phase liquide sourtirée de la zone de séparation d'anhydride carbonique est envoyée dans une première zone de désorption dans laquelle sont formés un mélange gazeux comprenant sensiblement de l'ammoniac, de l'anhydride carbonique et de l'eau et une solution diluée d'ammoniac, d'anhydride carbonique et d'eau, cette solution diluée étant partiellement envoyée dans la zone de séparation de l'anhydride carbonique et partiellement dans une seconde zone de désorption, seconde zone de désorption dans laquelle sensiblement la totalité de l'ammoniac et de l'anhydride carbonique est désorbée de la solution diluée, pour former un mélange gazeux comprenant sensiblement de l'eau, de l'ammoniac et de l'anhydride carbonique, d'une part, et de l'eau sensiblement pure, d'autre part.

2. Procédé selon la revendication 1, caractérisé en ce qu'on retourne le mélange gazeux de la seconde zone de désorption à la première zone de désorption.

3. Procédé selon la revendication 2, caractérisé en ce que toute la chaleur nécessaire pour les première et seconde zones de désorption est fournie dans la seconde zone de désorption.

4. Procédé selon l'une quelconque des revendications 1 à 3, caractérisé en ce que le mélange gazeux de la première zone de désorption est au moins partiellement fourni à la zone de séparation d'ammoniac.

5. Procédé selon la revendication 1, caractérisé en ce qu'à la zone de séparation d'anhydride carbonique, ou fournit de l'eau de dilution qui représente de 0,2 à 6 fois l'alimentation de cette zone.

6. Procédé selon la revendication 1, caractérisé en ce que la pression de système dans la zone de séparation d'anhydride carbonique est plus élevée que dans la zone de séparation d'ammoniac.

FIG.1

FIG. 2

FIG. 3